# EUROPEAN PATENT SPECIFICATION

(11) **EP 1 506 729 B1**
(45) Date of publication and mention of the grant of the patent: **15.11.2006**
(21) Application number: 02732770.9
(22) Date of filing: 22.05.2002
(51) Int. Cl.: A47C 7/26, B29C 43/18, B29C 70/76

(54) **METHOD AND DEVICE FOR PRODUCING THERMOSTABLE PLASTIC PARTS WITH A TEXTILE COVERING COMPRISING FLEXIBLE VANDAL-PROOF AREAS AND THE PART THUS OBTAINED**
VERFAHREN UND VORRICHTUNG ZUR HERSTELLUNG VON THERMOSTABILEN KUNSTSTOFFTEILEN MIT EINER TEXTILABDECKUNG MIT FLEXIBLEN, VOR VANDALISMUS GESCHÜTZTEN BEREICHEN UND DAS SO ERHALTENE TEIL
PIECES EN PLASTIQUE THERMOSTABLE PRESENTANT UN REVETEMENT TEXTILE COMPORTANT DES ZONES FLEXIBLES ANTIVANDALISME ET LEUR PROCEDE ET LEUR APPAREIL DE PRODUCTION

(43) Date of publication of application: 16.02.2005
(73) Proprietor: FIBERPACHS, SA, 08796 Pacs del Penedès (Barcelona) (ES)
(72) Inventor: GALITO BUIRA, Antoni, E-08720 Vilafranca del Penedès Barcelona (ES)
(74) Representative: Gislon, Gabriele
(86) International application number: PCT/ES2002/000242
(87) International publication number: WO 2003/096844

(56) References cited:
- EP-A1- 0 981 982
- GB-A- 1 222 908
- US-A- 5 116 556
- US-A- 5 275 769

## Description

### Field of the invention

This invention relates to a method and a device for producing thermostable plastic parts covered with a textile material, including in them one or more flexible areas with vandal-proof protection. This invention also relates to a part obtained with the said method and/or device.

The invention can be applied for example in the field of production of seats for public transport of passengers, such as trains, trams, buses, etc.

### Technical background

It is greatly important to provide all the furniture available to the public, such as seats for public transport vehicles of passengers, with high strength against vandal actions. For short trips transports, for example, metropolitan or suburban railroads and buses, currently it is made a great use of seats formed by thermostable plastic rigid components having a textile covering which provide them with a warmer appearance and touch than bare plastic. The said components have a great strength against vandal actions because the covering textile material is strongly adhered on the underlying thermostable plastic body which is very hard therefore it is impossible to tear, pierce or peel off the said textile material.

Documents EP-A-0405588, EP-A-0688641, JP-60-217130 and US-A-5,154,872 disclose methods for producing the said components of thermostable plastic covered with textile material, which have in common, putting aside logical variations, the fact of arranging the textile material within a mould, placing the raw thermostable plastic on the textile Material, then closing the mould, applying a pressure and a suitable temperature to obtain the plastic material is flowing and with it, moulding the final part in which the textile material remains closely adhered on the hardened thermostable plastic. The textile material can be composed of several different layers which can be fabric or nonwoven fabric and. anyway, the side designed to be apparent is arranged against the mould.

Although the seats formed by the said kind of components are comfortable enough for short trips, for longer trips they result too hard and at last they become very uncomfortable. That is why, for long trip vehicles, the seats are produced with full upholstery on fluffy substrates, the scarce vandal-proof protection thereof is offset by a lower number of users and a best watch.

However, for medium-sized trips, it would be expected to have available seats formed of thermostable plastic parts with a textile covering, as above disclosed, which however would include some given flexible areas adapted to be fluffy which would be provided with effective vandal-proof means.

The object of this invention is to meet above mentioned requirement by providing a method for producing thermostable plastic parts having a flexible covering including flexible areas having a vandal-proof protection, a device for implementing the said method and parts obtained by means of the said method and/or device.

### Description of the invention

Above object is achieved according to this invention, by providing a method which comprises following steps. First (a) preparing a set of moulding material composed of a textile material having a side designed to be apparent and the other side designed to remain concealed, the shape and size of the said textile material being adapted to encompass at least an area to be covered of a part to be produced; a metallic mesh material arranged on the said side of the textile material designed to remain concealed , the said metallic mesh material including at least an area designed to remain flexible and a peripheral external band along the outline thereof on the said area to be covered; and a raw, thermostable plastic material suitably distributed on the side of the textile material designed to remain concealed except the said area designed to remain flexible occupied by the metallic mesh material. Then (b) arranging the said set of moulded material in a recess of a related half-mould and then (c) applying under pressure a rammer having an outline coinciding with the area designed to remain flexible on the metallic mesh material placed on the textile material in the first half-mould and exerting a pressure against it, predetermined by pressure control means, sufficient to prevent that thermostable plastic material is introduced in the metallic mesh material existing on the area designed to remain flexible. Then (d) closing with driving means such as an hydraulic press, a second half-mould, provided with an opening tightly surrounding the said rammer, on the said first half-mould and exerting a pressure and applying heat on the said raw thermostable material sufficient to have it flows and therefore filling the recesses formed between the said first and second half-moulds, partly penetrating on the side of the textile material and in the interstices of the said metallic mesh on the area external to the outline of the said area designed to remain flexible. Last, (e) demoulding the part after a suitable curing period of time, obtaining this way a hardened thermostable plastic rigid part with at least an area covered with the said textile material including at least a flexible area formed by a window left on the thermostable plastic material by the rammer, where the said flexible area includes a vandal-proof protection formed by the said metallic mesh material arranged beneath the textile material covering.

When such a part is installed to form part of a seat, means are provided to give volume and elasticity to the said flexible area, such as springs or filling polymer foam. Thanks to the metallic mesh material arranged immediately beneath the textile material, the said flexible areas with volume and elasticity have a great strength against cuts, piercings, tears, etc. which use to be the most usual vandal actions on soft areas. On the other hand, and pursuant to most of the rules, all the materials composing the seats, including the textile material, have flame-resistant properties.

In short, the method of the invention consists in pressing first by means of a rammer the area designed to remain flexible, which has been duly prepared by means of the metallic mesh material, to prevent that the thermostable plastic material is introduced in it during a subsequent conventional moulding step. To implement the said method, this invention provides a device for producing thermostable plastic parts having a textile covering including flexible areas with vandal-proof protection comprising a first half-mould , having a recess which can receive the set of moulded material composed of a textile material, a metallic mesh material and a raw thermostable plastic material as defined above. The device also includes a rammer, having an outline coinciding with the area designed to remain flexible and located with relation to it, the said rammer is linked to driving means capable of applying it on the metallic mesh material placed on the textile material in the first half-mould, exerting a predetermined pressure sufficient to prevent that the thermostable plastic material is introduced in the metallic mesh material existing on the area designed to remain flexible. For this, pressure controlling means have been provided associated to the said rammer driving means capable to establish the said predetermined pressure. Last, the device includes a second half-mould provided with an opening tightly surrounding the said rammer and connected to driving means capable to close them on the said first half-mould leaving between them recesses defining the said part, and exerting a pressure which, combined with heat supplied by heating means , is sufficient to make the thermostable plastic material flows and therefore fills the said recesses formed between the said first and second half-moulds , partly penetrating in the textile material side and in the interstices of the said metallic mesh on the area external to the outline of the said area designed to remain flexible.

Advantageously, the rammer is linked to the second half-mould by guiding means which allow a relative travel between both, the rammer protruding from a lower face of the second half-mould, a distance sufficient for the rammer contacting the metallic mesh material before the second half-mould is closed on the first half-mould. The rammer driving means are constituted by the driving means themselves connected to the second half-mould and the said pressure controlling means are associated to a device sensitive to the said relative travel between the rammer and the second half-mould. This sensitive device comprises a piston linked to the rammer and which is acting to compress a fluid within a chamber associated to the second half-mould, the said chamber being connected to a pressure regulating valve which regulates the pressure of the said fluid in the said chamber, establishing this way a limit corresponding to the said predetermined pressure to be exerted by the first half-mould on the second. A pressure meter interposed between the chamber and the said pressure regulating valve provides an indication on the pressure existing within the chamber.

Thus, the thermostable plastic part with textile covering including flexible areas vandal-proof protection obtained by above method and/or above device comprises, as conventional, a rigid body of hardened thermostable material which has at least an area covered on which a textile material is fixed which has an apparent side and a concealed side. Unlike the parts of the prior art, here the covered area includes at least a flexible area provided with vandal-proof protection. This flexible area is formed by a window opened on the said rigid body of thermostable material and by a material of metallic mesh arranged on the said concealed side of the textile material, including the said window, and with an external peripheral band along the outline of the flexible area embedded in the thermostable plastic material. The said external band of the metallic mesh material embedded in the thermostable plastic material provides a significant strength to the flexible area.

Preferably, the said metallic mesh material is adhered on the concealed side of the textile material and comprises a knitted fabric of metallic thread, commercially available, of a metal selected out of a group including aluminium and steel. On its hand, the textile material can comprise, as usual in the technique of the sector, several laminate layers of fabric and/or nonwoven fabric, preferably the apparent side being a layer of fabric and the concealed side a nonwoven layer.

The part according to this invention is useful for forming part of a seat of a vehicle for public transport, being specially suitable for a vehicle for public transport for medium-sized trips.

### Short explanation of the drawings

The invention will be best apparent from following detailed description with reference to the drawing appended in which:
Fig. 1 is a cross sectional schematic view of a set of moulded material adapted to be used in the method or be arranged in the device of this invention;
Fig. 2, 3 and 4 are cross sectional schematic views of the device of this invention in different positions corresponding to a sequence of steps of the method of this invention;
Fig. 5 is a sectional schematic view in perspective of the part with a flexible area obtained following the method and/or by means of the device of Fig. 2, 3 and 4; and
Fig. 6 is a cross sectional schematic view showing the part of Fig. 5 associated to means for providing volume and elasticity to the flexible area.

### Detailed description of an example of embodiment

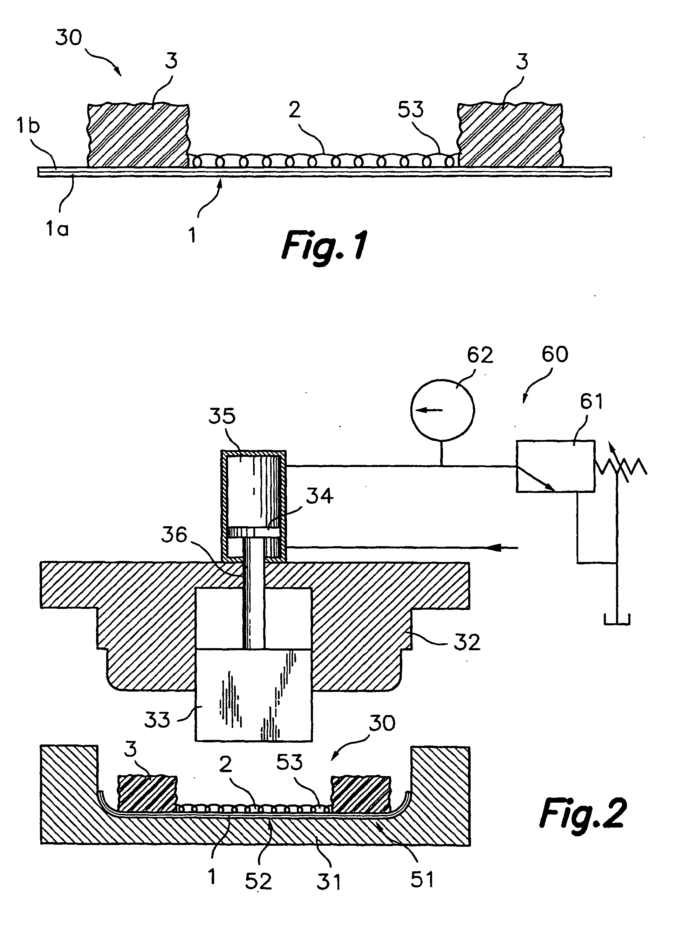

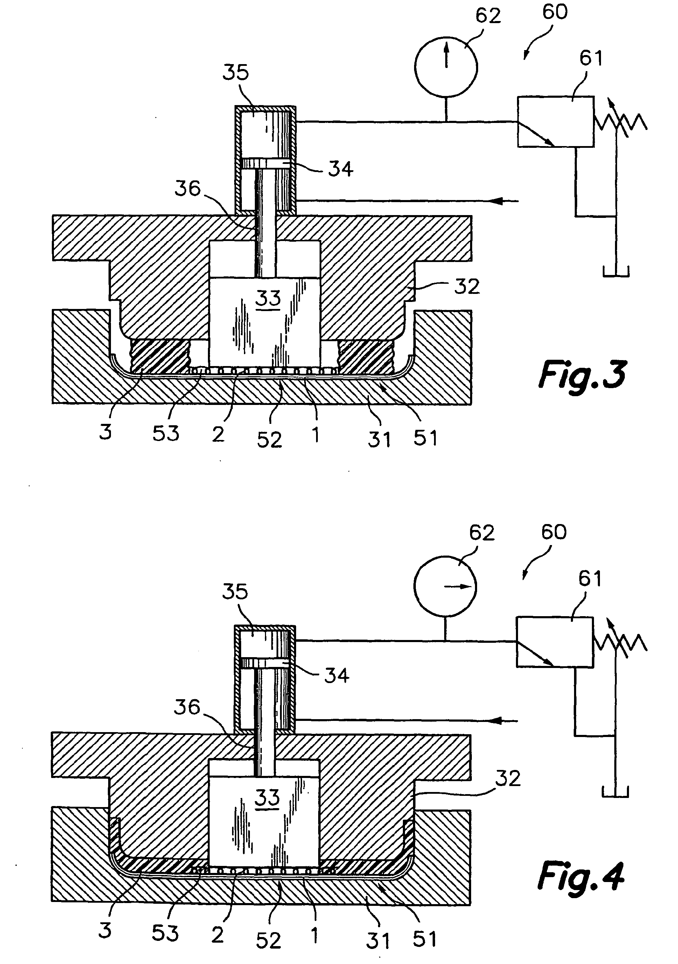

Referring first to Fig. 1, the method for producing thermostable plastic parts with a textile covering including flexible areas with vandal-proof protection of this invention comprises, first, the step (a) of preparing a set of moulded material 30 comprising all the elements which, by means of the following steps, will be formed as the part of the invention. This set of moulding material 30 is composed, first, of a textile material 1, having one or several laminated layers of fabric and/or nonwoven fabric according to any of the variations known of the technique of the sector, which anyway will have one side 1 a designed to be apparent and the other side 1b designed to remain concealed. The shape and size of the said textile material 1 is adapted to include at least one area to be covered 51 of the part 50 which is to be produced. On the said side 1b of the textile material designed to remain concealed a material of metallic mesh 2 is arranged, which includes at least an area designed to remain flexible 52 and an external peripheral band 53, along the outline thereof, on the said area to be covered 51. The said metallic mesh material 2 preferably comprises a knitted fabric of metallic thread, of a metal such as aluminium or steel, depending on the application, and advantageously it is adhered at the suitable position on the side 1b of the textile material 1 designed to remain concealed. Last, a raw thermostable plastic material 3 is suitably distributed on the rest of the side 1 b of the textile material 1 designed to remain concealed, that is to say, leaving free of plastic material the said area designed to remain flexible 52 occupied by the metallic mesh material 2. The amounts of thermostable plastic material 3 and its distribution on the said set of moulding material 30 will depend on each application and a man of the art will be able to easily establish them. Then, the method comprises (b) arranging the said set of moulded material 30 in a recess of a related first half-mould 31, as illustrated in Fig. 2. The following step is (c) applying under pressure a rammer 33 on the metallic mesh material 2 placed on the textile material 1 in the first half-mould 31 and exerting against it a predetermined pressure (Fig. 3). Then, (d) closing, with suitable driving means such as an hydraulic press, the second half-mould 32 on the said first half mould 31 and exerting a pressure and applying a heat on the said raw thermostable plastic material 3 sufficient to make it flows and therefore filling the recesses formed between the said first and second half-moulds 31, 32, partly penetrating in the side 1b of the textile material 1 and in the interstices of the said metallic mesh 2 on the external area of the outline of the said area designed to remain flexible 52. Last, there is only left the step (e) of demoulding the part 50 after a suitable curing period of time, obtaining this way the part wished.

Fig. 2 to 4 schematically show the device for implementing the method of the invention, the said device incorporating the said first half-mould 31 with the recess open at the top part. On the first half-mould 31 a rammer 33 is arranged, having an outline coinciding with the area designed to remain flexible 52 and located with relation to it. The said rammer 33 is linked to driving means capable of applying it on the metallic mesh material 2 placed on the textile material 1 in the first half-mould 31, exerting a predetermined pressure sufficient to prevent the penetration of the thermostable plastic material 3 in the metallic mesh material 2 existing on the area designed to remain flexible 52. Pressure controlling means 60 capable of establishing the said predetermined pressure are associated to the said driving means of the rammer 33. As conventional, the device includes a second half-mould 32 connected to driving means capable to close it on the said first half-mould 31 leaving between both recesses defining the said part and of exerting a pressure that, combined with the heat supplied by heating means is sufficient to make the thermostable plastic material flows and therefore filling the said recesses formed between the said first and second half-moulds 31, 32, and partly penetrating in the side 1b of the textile material 1. However, in the device of the invention, the said first half-mould 32 is provided with an opening which tightly surrounds the said rammer 33. In the example of embodiment illustrated, the rammer 33 is linked to the second half-mould 32 by guiding means 36 which allow a relative motion between both. The rammer 33 protrudes from a lower side of the second half-mould 32 a distance sufficient to allow that the rammer 33 contact the metallic mesh material 2 before the second half-mould 32 is closed on the first half-mould 31, the driving means of the rammer 33 being the driving means themselves connected to the second half-mould 32. With this construction, the said pressure controlling means 60 are associated to a device which is sensitive to the said relative motion between the rammer 33 and the second half-mould 32 and which comprises a piston 34 linked to the rammer 33, the said piston 32 acting to compress a fluid within a chamber 35 associated to the second half-mould 32. The said chamber 35 is connected to a pressure regulating valve 61, which regulates, that means, limits the pressure of the said fluid in the said chamber 35, establishing with it the predetermined pressure to be exerted by the rammer 33 which is typically lower than the moulding pressure exerted by the second half-mould 32. A pressure meter interposed between the chamber 35 and the said pressure regulating valve 61 provides an indication of the pressure existing in the chamber 35 which can be selected and/or set by conventional means, not shown. Thus, when the second half-mould 32 is moved towards the first 31, the rammer 33 contacts the metallic mesh material 2 on the area designed to remain flexible 52 (Fig. 3) and the pressure within the chamber 35 starts to increase. Thereafter, when the second half-mould 32 is closed against the first one 31, the rammer 33 exerts the predetermined pressure, limited by the regulating valve 61, against the metallic mesh material 2 on the area designed to remain flexible 52 preventing the penetration of thermoplastic material 3 in it, while the second half-mould 32 is applied against the first 31 with the complete moulding rated pressure. However, the interstices of the metallic mesh 2 on the external area of the outline of the area designed to remain flexible 52 now protected by the rammer 33, remain exposed and the thermoplastic material flows within them (Fig. 4).

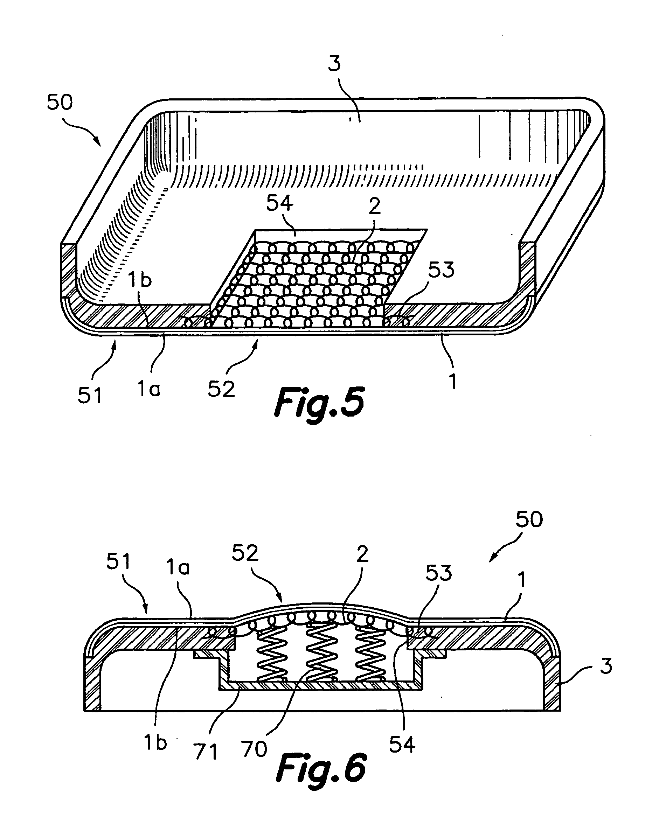

Fig. 5 shows the part obtained by the preceding method and/or device, which shows a substantially rigid hardened thermostable plastic body with at least an area covered 61 with the said textile material 1, which can be of a laminated single layer or several layers, adhered to each other. The side 1 a of the textile material 1 designed to be apparent is preferably a layer of fabric and now it the side exposed on the covered area 51 which provides the part with a warmer appearance and touch than those the bare plastic would have. The side 1b designed to remain concealed is preferably a nonwoven layer and it is strongly joined to the rigid body. The covered area 51 includes a flexible area 52, which is formed by a window 54 left on the thermostable plastic material 3 by the rammer 33. The textile material shows a complete visual continuity throughout the covered area, including the said flexible area 52. However, on the flexible area 52 a vandal-proof protection is present formed by the metallic mesh material 2 arranged beneath the textile material covering 1. The external peripheral band 53 of the metallic mesh material 2 remains embedded in the thermoplastic material 3 providing a strong fastening thereof. Preferably, the said metallic mesh material 2 is adhered on the concealed side 1b of textile material 1 and comprises a fabric of metallic thread, commercially available, of a metal such as aluminium or steel.

Fig. 6 shows an example of application of the part of the invention in which it is forming a part of, for example, a seat of a vehicle of public transport, specially designed to carry out medium-sized trips therefore means are provided to give volume and elasticity to the flexible area 52. These means, according to the schematic example illustrated comprise one or more springs 70 compressed between the metallic mesh material 2 and a supporting part 71 suitably fixed on the rear part, not seen, of the part rigid body. Other means, not shown, are possible to give volume and elasticity to the flexible area 52 such as a polymer foam filling, among others.

Although specific examples of embodiment have been disclosed, they must not to be interpreted as having a limiting nature but only an illustrative purpose of the scope of the invention which is defined by following claims.

## Claims

1. Method for producing thermostable plastic parts with a textile covering including flexible areas with vandal-proof protection, comprising the steps of:
(a) preparing a set of moulded material (30) composed of:
- a textile material (1) having one side (1a) designed to be apparent and another side (1b) designed to remain concealed, the shape and size of the said textile material (1) being adapted to include at least an area to be covered (51) of a part (50) to be produced;
- a metallic mesh material (2) arranged on the said side (1b) designed to remain concealed from the textile material (1) the said metallic mesh material (2) including at least an area designed to remain flexible (52) and an external peripheral band (53) along the outline thereof on the said area to be covered (51); and
- a raw thermostable plastic material (3) suitably distributed on the side (1b) designed to remain concealed from the textile material (1) except the said area designed to remain flexible (52) occupied by the metallic mesh material (2);
(b) arranging the said set of moulded material (30) in a recess of a related first half-mould (31);
(c) applying a rammer (33) under pressure having an outline coinciding with the area designed to remain flexible (52), on the metallic mesh material (2) placed on the textile material (1) in the first half-mould (31) and exerting a pressure against it which is predetermined by pressure controlling means (60) sufficient to prevent that the thermostable plastic material (3) penetrates in the metallic mesh material (2) existing on the area designed to remain flexible (52);
(d) closing, with driving means, such as a hydraulic press, a second half-mould (32) provided with an opening which tightly surrounds the said rammer (33) on the said first half-mould (31) and exerting a pressure and applying heat on the said raw thermostable plastic material (3) sufficient to make it flows and therefore fills the recessed formed between the said first and second half-moulds (31, 32) partly penetrates in the side (1b) of the textile material (1) and in the interstices of the said metallic mesh (2) on the external area of the outline of the said area designed to remain flexible (52); and
(e) demoulding the part (50) after the suitable curing period of time obtaining this way a hardened thermostable plastic rigid part with at least one area (51) covered with the said textile material (1) including at least a flexible area (52) formed by a window left on the thermostable plastic material (3) by the rammer (33) the said flexible area (52) including a vandal-proof protection formed by the said metallic mesh material (2) beneath the covering of the textile material (1).

2. Method according to claim 1, **characterised in that** it comprises adhering at the suitable position the said metallic mesh material (2) on the side (1b) of the textile material (1) designed to remain concealed.

3. Method according to claim 1 or 2, **characterised in that** the metallic mesh material (2) comprises a knitted fabric of metallic thread, of a metal selected out of a group including aluminium and steel.

4. Method according to claim 1, **characterised in that** the said textile material (1) comprises several laminated layers of fabric and/or nonwoven fabric.

5. Method according to claim 1 **characterised in that** the step of exerting a predetermined pressure with the rammer (33) comprises linking with guiding means (36) allowing the relative travel between both, the rammer (33) with the second half-mould (32) which is driven by the said driving means; and limiting the pressure applied by the rammer (33) with respect to the pressure exerted by the driving means on the second half-mould (32) with the said pressure controlling means (60) according to a relative travel between the rammer (33) and the second half-mould (32) during the action of closing the second half-mould (32) on the first half-mould (31).

6. Method according to claim 5, **characterised in that** it comprises the use of said relative travel between the rammer (33) and the second half-mould (32) for compressing a fluid in a chamber (35) and regulating by means of a pressure regulating valve (61) the pressure of the said fluid in the said chamber (35) establishing this way the said predetermined pressure exerted by the rammer (33).

7. Method according to claim 6 **characterised in that** it comprises associating the said chamber (35) to the second half-mould (32) and linking a piston (34) to the rammer (33) in order it acts for compressing the fluid in the chamber (35) by virtue of the relative travel between both.

8. Device for producing thermostable plastic parts with a textile covering including flexible areas with vandal-proof protection, comprising:
a first half-mould (31) having a recess which can receive a set of moulded material (30) composed of:
- a textile material (1) having a side (1a) designed to remain apparent and another side (1b) designed to remain concealed, the shape and size of the said textile material (1) being adapted to include at least an area to be covered (51) of a part to be produced (50);
- a metallic mesh material (2) arranged on the said side (1b) designed to remain concealed from the textile material (1) the said metallic mesh material (2) including at least an area designed to remain flexible (52) and an external peripheral band (53) along the outline thereof on the said area to be covered (51); and
- a raw thermostable plastic material (3) suitably distributed on the side (1b) designed to remain concealed from the textile material (1) except the said area designed to remain flexible (52) occupied by the metallic mesh material (2);
a rammer (33) having an outline coinciding with the area designed to remain flexible (52) and located with relation to it linked to driving means capable to apply it on the metallic mesh material (2) placed on the textile material (1) in the first half-mould (31) exerting a predetermined pressure sufficient to prevent the penetration of the thermostable plastic material (3) in the metallic mesh material (2) existing on the area designed to remain flexible (52);
pressure controlling means (60) associated to the said driving means of the rammer (33) capable to establish the said predetermined pressure;
a second half-mould (32) provided with an opening tightly surrounding the said rammer (33) and connected to driving means capable to close it on the said first half-mould (31) leaving between both recesses defining the said part and to exert a pressure which, combined with heat supplied by heating means is sufficient to make the thermostable material flows and therefore filling the said recesses formed between the said first and second half-moulds (31, 32), partly penetrating in the side (1b) of the textile material (1) and the interstices of the said metallic mesh (2) on the external area of the outline of the said area designed to remain flexible (52).

9. Device according to claim 8, **characterised in that** the rammer (33) is linked to the second half-mould (32) with guiding means (36) allowing a relative travel between both, the rammer (33) protruding from a lower face of the second half-mould (32) a distance sufficient for the rammer (33) contacting the metallic mesh material (2) before the second half-mould (32) is closed on the first half-mould (31), the rammer (33) driving means being the driving means themselves connected to the second half-mould (32) and the said pressure controlling means (60) being associated to a device sensitive to the said relative travel between the rammer (33) and the second half-mould (32).

10. Device according to claim 9, **characterised in that** the said device is sensitive to the said relative travel between the rammer (33) and the second half-mould (32) comprises a piston (34) linked to the rammer (33) the said piston (34) is acting to compress a fluid within a chamber (35) associated to the second half-mould (32), the said chamber (35) being connected to a pressure controlling valve (61) which regulates the pressure of the said fluid in the said chamber (35) establishing with it the said predetermined pressure to be exerted by the rammer (33).

11. Device, according to claim 10, **characterised in that** it comprises a pressure meter interposed between the chamber (35) and the said pressure regulating valve (61) to provide an indication of the pressure existing in the chamber (35).

12. Thermostable plastic part with a textile covering including flexible area with vandal-proof protection, the said part (50) comprising: a rigid body of hardened thermostable material which has at least an area covered (51) on which a textile material (1) is fixed with one side apparent (1a) and another side concealed (1b), the said covered side (51) including at least a flexible area (52) provided with vandal-proof protection, the said flexible area (52) being formed by a window on the said rigid body of thermostable material and a metallic mesh material (2) arranged on the said concealed side (1b) of textile material (1) including the said window and with an external peripheral band (53) along the outline of the flexible area (52) embedded in the thermostable plastic material.

13. Part, according to claim 12, **characterised in that** the said metallic mesh material (2) is adhered on the concealed side (1b) of the textile material (1).

14. Part according to claim 12 or 13 **characterised in that** the metallic mesh material (2) comprises a knitted fabric of metallic thread of a metal selected out of a group including aluminium and steel.

15. Part according to claim 12 **characterised in that** the said textile material (1) comprises several laminate layers of fabric and/or nonwoven fabric.

16. Part according to claim 15 **characterised in that** the said apparent side (1a) comprises a fabric and the said concealed side (1b) comprises a nonwoven fabric.

17. Part according to any of the claims 12 to 15 **characterised in that** it forms part of a seat.

18. Part according to any of the claims 12 to 15 **characterised in that** it forms part of a seat of a vehicle of public transport.

## Patentansprüche

1. Verfahren zur Herstellung wärmestabiler Kunststoffteile mit einem Textilüberzug mit biegsamen Bereichen mit zerstörungssicherem Schutz, das folgende Schritte umfasst:
(a) Herstellung eines Satzes Formmaterial (30) bestehend aus:
- einem Textilmaterial (1) mit einer Seite (1a), die sichtbar und einer weiteren Seite (1 b), die verborgen bleiben soll, wobei die Form und Größe des biegsamen Textilmaterials (1) so beschaffen sind, dass mindestens ein zu überziehender Bereich (51) eines herzustellenden Teils (50) vorhanden ist;
- einem Metallnetzmaterial (2), das sich auf der Seite (1 b) befindet, die vom Textilmaterial (1) verborgen bleiben soll, wobei das Metallnetzmaterial (2) mindestens einen Bereich, der biegsam bleiben soll (52), sowie ein äußeres Umfangsband (53) entlang dessen Umriss in dem zu überziehenden Bereich (51) aufweist; sowie
- einem wärmestabilen Kunststoffrohmaterial (3), das in geeigneter Weise auf der Seite (1b), die vom Textilmaterial (1) verborgen bleiben soll, verteilt ist, mit Ausnahme des Bereichs, der biegsam bleiben soll (52) und mit dem Metallnetzmaterial (2) belegt ist;
(b) Anordnung des Satzes Formmaterial (30) in einer Aussparung einer entsprechenden ersten Werkzeughälfte (31);
(c) Anlegen einer Ramme (33) mit einem dem Bereich, der biegsam bleiben soll (52), entsprechenden Umriss unter Druck an das Metallnetzmaterial (2), das sich in der ersten Werkzeughälfte (31) auf dem Textilmaterial (1) befindet, sowie Ausüben eines darauf gerichteten Drucks, der durch Druckregulierungsmittel (60) so vorgegeben ist, dass das wärmestabile Kunststoffmaterial (3) daran gehindert wird, in das auf dem Bereich, der biegsam bleiben soll (52), vorliegende Metallnetzmaterial (2) einzudringen;
(d) Verschließen einer zweiten Werkzeughälfte (32) mit Hilfe von Antriebsmitteln wie z.B. einer Hydraulikpresse, wobei die zweite Werkzeughälfte eine Öffnung aufweist, die die Ramme (33) dicht umgibt, mit der ersten Werkzeughälfte (31), sowie Ausüben solch eines Drucks und Anwendung solch einer Wärme auf das wärmestabile Kunststoffrohmaterial (3), dass dieses zum Fließen gebracht wird und daher die zwischen der ersten und zweiten Werkzeughälfte (31, 32) gebildete Aussparung füllt und teilweise in die Seite (1b) des Textilmaterials (1) und in die Zwischenräume des metallischen Drahtnetzes (2) am Außenbereich des Umrisses des Bereiches eindringt, der biegsam bleiben soll (52); sowie
(e) Trennen des Teils (50) nach einer geeigneten Härtungszeit, wodurch ein gehärtetes wärmestabiles Steifteil entsteht, bei dem mindestens ein Bereich (51) mit dem Textilmaterial (1) überzogen ist und mindestens einen biegsamen Bereich (52) aus einem auf dem wärmestabilen Kunststoffmaterial (3) durch die Ramme (33) gebildeten Fenster aufweist, wobei der biegsame Bereich (52) einen zerstörungssicheren Schutz aufweist, der durch das Metallnetzmaterial (2) unter dem Überzug des Textilmaterials (1) gebildet wird.

2. Verfahren nach Anspruch 1, **dadurch gekennzeichnet, dass** es außerdem einen Schritt zum Festkleben des Metallnetzmaterials (2) an einer geeigneten Stelle der Seite (1b) des Textilmaterials (1), die verborgen bleiben soll, aufweist.

3. Verfahren nach Anspruch 1 oder 2, **dadurch gekennzeichnet, dass** das Metallnetzmaterial (2) aus einem Metallfadengewirk eines Metalls besteht, das ausgewählt ist aus der Gruppe bestehend aus Aluminium und Stahl.

4. Verfahren nach Anspruch 1, **dadurch gekennzeichnet, dass** das Textilmaterial (1) verschiedene kaschierte Lagen aus Gewebe und/oder Vliesstoff aufweist.

5. Verfahren nach Anspruch 1, **dadurch gekennzeichnet, dass** bei dem Schritt der Ausübung eines vorgegebenen Drucks mit der Ramme (33) eine Verknüpfung mit Führungsmitteln (36), wobei die Relativbewegung der Ramme (33) zur zweiten Werkzeughälfte (32), die von den Antriebsmitteln. angetrieben wird, ermöglicht wird, und eine Begrenzung des von der Ramme (33) ausgeübten Drucks, bezogen auf den von den Antriebsmitteln auf die zweite Werkzeughälfte (32) ausgeübten Druck, mit Hilfe der Druckregulierungsmittel (60) je nach der Relativbewegung der Ramme (33) zur zweiten Werkzeughälfte (32) während des Schließvorgangs der zweiten Werkzeughälfte (32) mit der ersten Werkzeughälfte (31) erfolgen.

6. Verfahren nach Anspruch 5, **dadurch gekennzeichnet, dass** es einen Schritt umfasst, mit dem aufgrund der Relativbewegung der Ramme (33) zur zweiten Werkzeughälfte (32) eine Flüssigkeit in einer Kammer (35) komprimiert und mit einem Druckregulierungsventil (61) der Druck der Flüssigkeit in der Kammer (35) reguliert und auf diese Weise der durch die Ramme (33) ausgeübte vorgegebene Druck hergestellt wird.

7. Verfahren nach Anspruch 6, **dadurch gekennzeichnet, dass** es einen Schritt zur Verbindung der Kammer (35) mit der zweiten Werkzeughälfte (32) und zur Verknüpfung eines Kolbens (34) mit der Ramme (33) umfasst, damit durch die Relativbewegung der beiden die Flüssigkeit in der Kammer (35) komprimiert wird.

8. Vorrichtung zur Herstellung wärmestabiler Kunststoffteile mit einem Textilüberzug mit biegsamen Bereichen mit zerstörungssicherem Schutz, mit:
einer ersten Werkzeughälfte (31) mit einer Aussparung, die befähigt ist zur Aufnahme eines Satzes Formmaterial (30) bestehend aus:
- einem Textilmaterial (1) mit einer Seite (1 a), die sichtbar und einer weiteren Seite (1 b), die verborgen bleiben soll, wobei die Form und Größe des Textilmaterials (1) so beschaffen sind, dass mindestens ein zu überziehender Bereich (51) eines herzustellenden Teils (50) vorhanden ist;
- einem Metallnetzmaterial (2), das sich auf der Seite (1b) befindet, die vom Textilmaterial (1) verborgen bleiben soll, wobei das Metallnetzmaterial (2) mindestens einen Bereich, der biegsam bleiben soll (52), sowie ein äußeres Umfangsband (53) entlang dessen Umriss in dem zu überziehenden Bereich (51) aufweist; sowie
- einem wärmestabilen Kunststoffrohmaterial (3), das in geeigneter Weise auf der Seite (1b), die vom Textilmaterial (1) verborgen bleiben soll, verteilt ist, mit Ausnahme des Bereichs, der biegsam bleiben soll (52) und mit dem Metallnetzmaterial (2) belegt ist;
einer Ramme (33) mit einem dem Bereich, der biegsam bleiben soll (52), entsprechenden Umriss, die mit Antriebmitteln verknüpft ist, die in der Lage sind, diese an das Metallnetzmaterial (2), das sich in der ersten Werkzeughälfte (31) auf dem Textilmaterial (1) befindet, anzulegen, wodurch ein vorgegebener Druck ausgeübt wird, der ausreicht, das wärmestabile Kunststoffmaterial (3) daran zu hindern, in das auf dem Bereich, der biegsam bleiben soll (52), vorliegende Metallnetzmaterial (2) einzudringen;
Druckregulierungsmitteln (60), die mit den Antriebsmitteln der Ramme (33) in Verbindung stehen und in der Lage sind, den vorgegebenen Druck herzustellen;
einer zweiten Werkzeughälfte (32) mit einer Öffnung, die die Ramme (33) dicht umgibt und mit Antriebsmitteln verbunden ist, die in der Lage sind, sie mit der ersten Werkzeughälfte (31) zu verschließen, wobei zwischen beiden eine Aussparung zurückbleibt, durch die das Teil definiert ist, und solch einen Druck auszuüben, dass dieser zusammen mit der zugeführten Wärme das wärmestabile Kunststoffrohmaterial zum Fließen bringt, wodurch dieses die zwischen der ersten und zweiten Werkzeughälfte (31, 32) gebildete Aussparung füllt und teilweise in die Seite (1 b) des Textilmaterials (1) und in die Zwischenräume des metallischen Drahtnetzes (2) am Außenbereich des Umrisses des Bereiches eindringt, der biegsam bleiben soll (52).

9. Vorrichtung nach Anspruch 8, **dadurch gekennzeichnet, dass** die Ramme (33) über Führungsmittel (36) mit der zweiten Werkzeughälfte (32) verbunden ist, wodurch eine Relativbewegung zwischen beiden ermöglicht wird, wobei die Ramme (33) von einer unteren Fläche der zweiten Werkzeughälfte (32) so weit hervorsteht, dass die Ramme (33) mit dem Metallnetzmaterial (2) in Kontakt treten kann, bevor die zweite Werkzeughälfte (32) mit der ersten Werkzeughälfte (31) verschlossen wird, wobei die Antriebsmittel für die Ramme (33) mit der zweiten Werkzeughälfte (32) verbunden sind und die Druckregulierungsmittel (60) mit einer Vorrichtung in Verbindung stehen, die auf die Relativbewegung der Ramme (33) zur zweiten Werkzeughälfte (32) anspricht.

10. Vorrichtung nach Anspruch 9, **dadurch gekennzeichnet, dass** sie auf die Relativbewegung der Ramme (33) zur zweiten Werkzeughälfte (32) anspricht und einen mit der Ramme (33) verknüpften Kolben (34) aufweist, der eine Flüssigkeit innerhalb einer mit der zweiten Werkzeughälfte (32) in Verbindung stehenden Kammer (35) komprimiert, wobei die Kammer (35) mit einem Druckregulierungsventil (61) verbunden ist, durch das der Druck der Flüssigkeit in der Kammer (35) reguliert wird, wodurch der von der Ramme (33) ausgeübte vorgegebene Druck hergestellt wird.

11. Vorrichtung nach Anspruch 10, **dadurch gekennzeichnet, dass** sie zur Anzeige des in der Kammer (35) herrschenden Drucks einen Druckmesser aufweist, der zwischen der Kammer (35) und dem Druckregulierungsventil (61) angeordnet ist.

12. Wärmestabiles Kunststoffteil mit einem Textilüberzug mit einem biegsamen Bereich mit zerstörungssicherem Schutz, wobei das Teil (50) folgendes umfasst: einen Steifkörper aus gehärtetem wärmestabilem Material, das mindestens einen Überzugsbereich (51) aufweist, an dem ein Textilmaterial (1) mit einer sichtbaren Seite (1 a) und einer weiteren verborgenen Seite (1 b) befestigt ist, wobei die Überzugsseite (51) mindestens einen biegsamen Bereich (52) mit zerstörungssicherem Schutz und der biegsame Bereich (52) aus einem auf dem Steifkörper aus wärmestabilem Material gebildeten Fenster und einem Metallnetzmaterial (2) besteht, das auf der verborgenen Seite (1 b) des Textilmaterials (1) zusammen mit dem Fenster und einem äußeren Umfangsband (53) entlang des Umrisses des biegsamen Bereichs (52) angeordnet ist, das im wärmestabilen Kunststoffmaterial eingebettet ist.

13. Teil nach Anspruch 12, **dadurch gekennzeichnet, dass** das Metallnetzmaterial (2) auf die verborgene Seite (1b) des Textilmaterials (1) aufgeklebt wird.

14. Teil nach Anspruch 12 oder 13, **dadurch gekennzeichnet, dass** das Metallnetzmaterial (2) aus einem Metallfadengewirke eines Metalls besteht, das ausgewählt ist aus der Gruppe bestehend aus Aluminium und Stahl.

15. Teil nach Anspruch 12, **dadurch gekennzeichnet, dass** das Textilmaterial (1) mehrere kaschierte Lagen aus einem Gewebe und/oder Vliesstoff aufweist.

16. Teil nach Anspruch 15, **dadurch gekennzeichnet, dass** die sichtbare Seite (1 a) aus einem Gewebe und die verborgene Seite (1 b) aus einem Vliesstoff besteht.

17. Teil nach einem der Ansprüche 12 bis 15, **dadurch gekennzeichnet, dass** es Teil eines Sitzes bildet.

18. Teil nach einem der Ansprüche 12 bis 15, **dadurch gekennzeichnet, dass** es Teil eines Sitzes eines öffentlichen Verkehrsmittel bildet.

## Revendications

1. Méthode pour fabriquer des pièces en plastique stable à la chaleur ayant un recouvrement textile comprenant des zones flexibles avec protection résistante au vandalisme, comportant les étapes de:
(a) préparer un ensemble en matériau moulé (30) composé de:
- un textile (1) ayant un côté (1a) destiné à être apparent et un autre côté (1 b) destiné à rester caché, la forme et la taille de ce textile (1) étant adaptées pour comprendre au moins une région à recouvrir (51) d'une partie (50) à fabriquer;
- un treillis métallique (2) aménagé sur ce côté (1 b) destiné à rester caché du textile (1) ce treillis métallique (2) comportant au moins une région destinée à rester flexible (52) et une bande périphérique externe (53) le long de son contour sur cette région à recouvrir (51); et
- une matière plastique en brut (3) stable à la chaleur, convenablement distribuée sur le côté (1 b), destinée à rester cachée du textile (1) sauf cette région destinée à rester flexible (52) occupée par le treillis métallique (2);
(b) aménager cet ensemble de matériau moulé (30) dans un creux d'un premier demi-moule correspondant (31);
(c) appliquer un fouloir (33) sous pression ayant un contour coïncidant avec la région destinée à rester flexible (52), sur le treillis métallique (2) situé sur le textile (1) dans le premier demi moule (31) et exerçant une pression contre celui-ci qui est prédéterminée par des moyens de contrôle de la pression (60) suffisante pour éviter que la matière plastique stable à la chaleur (3) pénètre dans le treillis métallique (2) existant dans la région destinée à rester flexible (52);
(d) fermer avec des moyens de commande tel qu'une presse hydraulique, un deuxième demi moule (32) pourvu d'une ouverture qui entoure hermétiquement ce fouloir (33) sur ce premier demi moule (31) et exercer une pression et appliquer de la chaleur à cette matière plastique en brut stable à la chaleur (3) suffisante pour la faire couler et ainsi remplir le creux formé entre ces premier et deuxième demi moules (31, 32), en pénétrant en partie sur le côté (1b) du textile (1) et dans les interstices de ce treillis métallique (2) sur la région externe du contour de cette région destinée à rester flexible (52); et
(e) démouler la partie (50) après le temps de durcissement approprié en obtenant ainsi une pièce en plastique rigide, durcie, stable à la chaleur, ayant au moins une région (51) recouverte de ce textile (1) comportant au moins une région flexible (52) formée par une fenêtre laissée dans la matière plastique stable à la chaleur (3) par le fouloir (33), cette région flexible (52) comprenant une protection résistante au vandalisme formée par ce treillis métallique (2) au-dessous du recouvrement en textile (1).

2. Méthode conformément à la revendication 1, **caractérisée en ce qu'**elle comporte fixer à la position appropriée ce treillis métallique (2) sur le côté (1b) du textile (1) destiné à rester caché.

3. Méthode conformément à la revendication 1 ou 2, **caractérisée en ce que** le treillis métallique (2) comprend un tricot à fils métalliques d'un métal choisi du groupe comportant l'aluminium et l'acier.

4. Méthode conformément à la revendication 1, **caractérisée en ce que** ce textile (1) comporte plusieurs couches stratifiées de tissu et/ou de tissu non-tissé.

5. Méthode conformément à la revendication 1 **caractérisée en ce que** l'étape pour exercer une pression prédéterminée avec le fouloir (33) comprend relier, avec des moyens de guidage (36) permettant le déplacement relatif entre les deux, le fouloir (33) et le deuxième demi moule (32) qui est commandé par ces moyens de commande; et limiter la pression appliquée par le fouloir (33) par rapport à la pression exercée par les moyens de commande sur le deuxième demi moule (32) avec ces moyens de contrôle de pression (60) conformément à un déplacement relatif entre le fouloir (33) et le deuxième demi moule (32) durant l'action de fermer le deuxième demi moule (32) sur le premier demi moule (31).

6. Méthode conformément à la revendication 5, **caractérisée en ce qu'**elle comporte l'utilisation de ce déplacement relatif entre le fouloir (33) et le deuxième demi moule (32) pour comprimer un fluide dans une chambre (35) et réguler au moyen d'un régulateur de pression (61) la pression de ce fluide dans cette chambre (35) en établissant ainsi cette pression prédéterminée exercée par le fouloir (33).

7. Méthode conformément à la revendication 6 **caractérisée en ce qu'**elle comporte l'association de cette chambre (35) au deuxième demi moule (32) et relier un piston (34) au fouloir (33) afin d'agir pour comprimer le fluide dans la chambre (35) par le biais du déplacement relatif entre les deux.

8. Dispositif pour fabriquer des pièces en plastique stable à la chaleur ayant un recouvrement textile comprenant des régions flexibles avec une protection résistante au vandalisme, comportant:
un premier demi moule (31) ayant un creux pouvant recevoir un ensemble en matériau moulé (30) composé de:
- un textile (1) ayant un côté (1a) destiné à rester apparent et un autre côté (1b) destiné à rester caché, les forme et taille de ce textile (1) étant adaptées pour comprendre au moins une région à recouvrir (51) d'une pièce à fabriquer (50);
- un treillis métallique (2) aménagé sur ce côté (1 b) destiné à rester caché du textile (1) ce treillis métallique (2) comprenant au moins une région destinée à rester flexible (52) et une bande externe périphérique (53) le long de son contour sur cette région à couvrir (51); et
- une matière plastique en brut stable à la chaleur (3) convenablement distribuée sur le côté (1b) destinée à rester cachée du textile (1) sauf cette région destinée à rester flexible (52) occupée par le treillis métallique (2);
un fouloir (33) ayant un contour coïncidant avec la région destinée à rester flexible (52) et situé par rapport à celle-ci relié au moyen de commande capable de l'appliquer sur le treillis métallique (2) placé sur le textile (1) dans le premier demi moule (31) en exerçant une pression prédéterminée suffisante pour éviter la pénétration de la matière plastique stable à la chaleur (3) dans le treillis métallique (2) existant dans la région destinée à rester flexible (52).
moyens de contrôle de la pression (60) associés à ces moyens de commande du fouloir (33) capable d'établir cette pression prédéterminée;
un deuxième demi moule (32) pourvu d'une ouverture entourant hermétiquement ce fouloir (33) et relié aux moyens de commande capables de le fermer sur ce premier demi moule (31) en laissant entre les deux des creux définissant cette partie et d'exercer une pression qui, combinée avec la chaleur fournie par des moyens chauffants est suffisante pour faire que le matériau stable à la chaleur coule et remplisse ainsi ces creux formés entre ces premier et deuxième demi moules (31, 32), en pénétrant en partie sur le côté (1b) du textile (1) et dans les interstices de ce treillis métallique (2) sur la région externe du contour de cette région destinée à rester flexible (52).

9. Dispositif conformément à la revendication 8, **caractérisée en ce que** le fouloir (33) est relié au deuxième demi moule (32) par des moyens de guidage (36) permettant un déplacement relatif entre les deux, le fouloir (33) dépassant une face inférieure du deuxième demi moule (32) d'une distance suffisante pour que le fouloir (33) entre en contact avec le treillis métallique (2) avant que le deuxième demi moule (32) soit fermé sur le premier demi moule (31), les moyens de commande du fouloir (33) ces moyens de commande étant reliés au deuxième demi moule (32) et ces moyens de contrôle de pression (60) étant reliés à un dispositif sensible à ce déplacement relatif entre le fouloir (33) et le deuxième demi moule (32).

10. Dispositif conformément à la revendication 9, **caractérisé en ce que** ce dispositif sensible à ce déplacement relatif entre le fouloir (33) et le deuxième demi-moule (32) comprend un piston (34) relié au fouloir (33) ce piston (34) agissant pour comprimer un fluide à l'intérieur d'une chambre (35) reliée au deuxième demi moule (32), cette chambre (35) étant reliée à un régulateur de pression (61) qui régule la pression de ce fluide dans cette chambre (35) en établissant avec elle cette pression prédéterminée que le fouloir (33) doit exercer.

11. Dispositif conformément à la revendication 10, **caractérisé en ce qu'**il comprend un manomètre interposé entre la chambre (35) et ce régulateur de pression (61) pour fournir une indication de la pression existant dans la chambre (35).

12. Pièce en plastique stable à la chaleur ayant un recouvrement textile comprenant une région flexible avec protection résistante au vandalisme, cette pièce (50) comportant: un corps rigide en matériau durci, stable à la chaleur, possédant au moins une région recouverte (51) sur laquelle un textile (1) est fixé, un des côtés étant apparent (1a) et un autre côté caché (1 b), ce côté recouvert (51) comprenant au moins une région flexible (52) pourvue de protection résistante au vandalisme, cette région flexible (52) étant formée par une fenêtre dans ce corps rigide en matériau stable à la chaleur et un treillis métallique (2) aménagé sur ce côté caché (1b) en textile (1) comprenant cette fenêtre et avec une bande externe périphérique (53) le long du contour de la région flexible (52) encastrée dans la matière plastique stable à la chaleur.

13. Pièce, conformément à la revendication 12, **caractérisée en ce que** ce treillis métallique (2) est fixé sur le côté caché (1 b) du textile (1).

14. Pièce conformément à la revendication 12 ou 13 **caractérisée en ce que** le treillis métallique (2) comporte un tricot à fils métalliques d'un métal choisi d'un groupe comportant l'aluminium et l'acier.

15. Pièce conformément à la revendication 12, **caractérisée en ce que** ce textile (1) comporte plusieurs couches stratifiées de tissu et/ou de tissu non-tissé.

16. Pièce conformément à la revendication 15 **caractérisée en ce que** ce côté apparent (1a) comporte un tissu et ce côté caché (1 b) comporte un tissu non-tissé.

17. Pièce conformément à l'une quelconque des revendications 12 à 15 **caractérisée en ce qu'**elle fait partie d'un siège.

18. Pièce conformément à une quelconque des revendications 12 à 15 **caractérisée en ce qu'**elle fait partie d'un siège d'un véhicule de transport en commun.
